# EUROPEAN PATENT APPLICATION

(11) **EP 1 690 692 A1**
(43) Date of publication of application: **16.08.2006**
(21) Application number: 04799504.8
(22) Date of filing: 04.11.2004
(51) Int. Cl.: B41M 5/26, G11B 7/24

(54) **PHASE-CHANGE OPTICAL RECORDING MEDIUM**

(30) Priority: 05.11.2003 JP 2003375817
(71) Applicant: Ricoh Company, Ltd., Tokyo 143-8555 (JP)
(72) Inventor: OHKURA, Hiroko, Yokohama-shi, Kanagawa 2240034 (JP); ITO, Kazunori, Yokohama-shi, Kanagawa 2240006 (JP); DEGUCHI, Hiroshi, Yokohama-shi, Kanagawa 2320026 (JP); KATO, Masaki, Sagamihara-shi, Kanagawa 2280811 (JP); ABE, Mikiko, Kawasaki-shi, Kanagawa 2100023 (JP)
(74) Representative: Barz, Peter
(86) International application number: PCT/JP2004/016347
(87) International publication number: WO 2005/044577

(57) **Abstract**

The present invention is a phase-change optical recording medium where a distribution of reflection rates within a periphery after initial crystallization is uniform, and overwriting record at the same capacity as the capacity in DVD-ROM and at a recording linear velocity of 10 times speed (35 m/s) is possible, comprising a substrate; a first intermediate layer; a recording layer; a second intermediate layer; and a reflective layer, wherein the first intermediate layer, the recording layer, the second intermediate layer; and the reflective layer are formed on the substrate in this order,
the recording layer is composed of an alloy with a composition represented by GaαSnβInγSbδ (α, β,γ and δ are atomic ratios, 5≤α≤20, 2≤β≤20, 2≤γ≤20, 40≤δ≤80, α + β + γ + δ = 100); and the phase-change optical recording medium is writable and erasable by taking advantage of a reversible phase change between an amorphous phase and a crystal phase in the recording layer.

## Description

### Technical Field

The present invention relates to a phase-change optical recording medium where a recording material is optically changed to record and reproduce information by irradiating laser light and rewriting is possible.

### Background Art

For current DVD based recording materials, a system in which rapid recording at 2.5 times faster speed (about 8.5 m/s) can be performed has been developed, and request for more rapid recording has been increased. In the phase change recording materials currently used for DVD + RW, AgInSbTe based rapid recording material employed in CD-RW has been improved to enable record deletion at high line speed. In this material system, a content of Sb is increased in order to respond to a recording speed in a high line speed area compared with the recording material corresponding to CD-RW, but when an amount of Sb is increased, it is problematic in that a crystallization temperature is lowered although a crystallization speed becomes high. It has been identified by experiments that the lowered crystallization temperature leads to deterioration of storage reliability. The content of Ag is increased or a fifth row element such as Ge is added in the recording material so that the storage reliability of disc does not become substantially problematic. However, when the amount of Sb is increased in order to achieve the recording at higher line speed, phases are separated and a recording layer does not work as a phase change layer. A limit recording speed at that time is estimated to be about 18 m/s.

Thus, the present inventors has focused on a GaSb material system as a material for the rapid recording in next generation in place of the AgInSbTe system. In the vicinity of GaSb eutectic composition, the crystallization speed is fast because the amount of Sb is large, and large energy is required for cleaving covalent bonds to recompose a network in order to thermally crystallize an amorphous phase because a bonding force between Ga and Sb is large. Therefore, the GaSb material is also excellent in stability of amorphous mark. The present inventors have reported in the 14th Symposium on Phase Change Optical Information Storage that recording can be repeatedly performed at high line speed of DVD 8 times speed in the optical recording medium using this GaSb eutectic composition alloy for the recording layer (Non-patent Document 1). However, for its practical application, there are various problems such as initialization property and storage property to be solved.

As the other technology known publicly using the GaSb material system, it has been disclosed in Patent Document 1 to use the recording material in which a metal or chalcogenide element M has been added to an alloy of GaSb at a composition ratio of approximately 50(Ga): 50(Sb). However, in the alloy with the composition of approximate Ga₅₀Sb₅₀ (atomic %), a melting point is 710°C and the crystallization temperature is 350°C, which are high, thus even when initial crystallization is attempted, a uniform crystal state within the periphery is not obtained to make reflection rates uneven because the power is short in a currently commercially available initialization apparatus. When the mark is recorded in the state where the reflection rates are uneven, noise of signals is large and it is difficult to record the signals at high density, particularly as in DVD.

In Patent Document 2, a phase-change optical recording medium using the alloy whose main component is GaSb as the recording material has been disclosed, but in this optical recording medium, the information is recorded using the phase change between the crystal and the crystal. An aspect of its phase change is different from that in the present invention, and its degree of modulation is 29% in the best case, which is practically problematic. Furthermore, in the phase change between the crystal and the crystal, the difference of the reflection rates due to the difference of crystal particle sizes is utilized. Thus, this is unsuitable for the information recording at high density in which it is necessary to record fine marks, and it is difficult to record the information in this optical recording medium at a density of the same capacity as in DVD-ROM.
[Patent Document 1] US Patent No. 4,818,666 Specification;
[Patent Document 2] Japanese Patent Application Laid-Open (JP-A) No. 61-168145 Publication;
[Patent Document 3] JP-A No. 09-286174 Publication;
[Patent Document 4] JP-A No. 09-286175 Publication; and
[Non-patent Document 1] Proceedings of the 14th Symposium on Phase Change Optical Information Storage, p11, "Characterization of GaSb Phase-Change Material of High-Speed ReWritable Media"

### Disclosure of Invention

The present invention aims at providing a phase-change optical recording medium where a distribution of reflection rates within a periphery is uniform, and overwriting record at the same capacity as in DVD-ROM and at a recording linear velocity of 10 times speed (35 m/s) is possible, and a sufficient degree of modulation can be assured.

In order to make the phase-change optical recording medium capable of rapidly recording fit for practical use, the materials having a more excellent property than those in the above previous inventions have been studied. As a result, it has been found that a recording material whose crystallization speed is fast is required because the phase change from an amorphous mark to a crystal must be terminated in a short time for repeatedly recording at high speed, and that when the recording material whose crystallization speed is fast is used, recrystallization from edges of the amorphous mark progresses rapidly, therefore, an amorphous mark width in a vertical direction to a laser scanning direction becomes small and the degree of modulation tends to become small. When an Sb amount is increased from GaSb eutectic composition, it is possible to make the crystallization speed fast, but when the Sb amount is excessively increased, an explosive crystallization which is inherent for Sb occurs, and the crystal which has largely grown in one direction appears in a portion. Thus, it has been found that the distribution of the reflection rates within the periphery becomes large, which becomes the noise.

And it has been found that a recording material containing Ga, Sn, In and Sb is good as the material where the recording at high density of the capacity equivalent to or more than the capacity in DVD-ROM is possible and further the recording at high line speed can be done, the initial crystallization is easier and the degree of modulation becomes larger than in the GaSb system.

That is, the above problems are solved by the following inventions 1) to 5) (hereinafter, referred to as the present invention 1 to 5).
1) A phase-change optical recording medium comprising: a substrate; a first intermediate layer; a recording layer; a second intermediate layer; and a reflective layer, wherein the first intermediate layer, the recording layer, the second intermediate layer, and the reflective layer are formed on the substrate in this order, the recording layer is composed of an alloy with a composition represented by GaαSnβInγSbδ (α, β,γ and δ are atomic ratios, 5≤α≤20, 2≤β≤20, 2≤γ≤20, 40≤δ≤80, α + β + γ + δ = 100), and the phase-change optical recording medium is writable and erasable by taking advantage of a reversible phase change between an amorphous phase and a crystal phase in the recording layer.
2) A phase-change optical recording medium according to 1) above wherein the atomic ratios are 5≤α≤15, 5≤β≤15, 5≤γ≤15 and 55≤δ≤75.
3) A phase-change optical recording medium according to 1) or 2) above wherein the reflective layer is composed of one of Ag and an alloy comprising at least 80 atomic % Ag.
4) A phase-change optical recording medium according to 3) above wherein a film thickness of the reflective layer is 60 nm to 300 nm.
5) A phase-change optical recording medium according to 4) above wherein a film thickness of the reflective layer is 120 nm to 250 nm.

### Brief Description of Drawings

FIG. 1 is a view showing a basic layer constitution of an optical recording medium of the present invention;

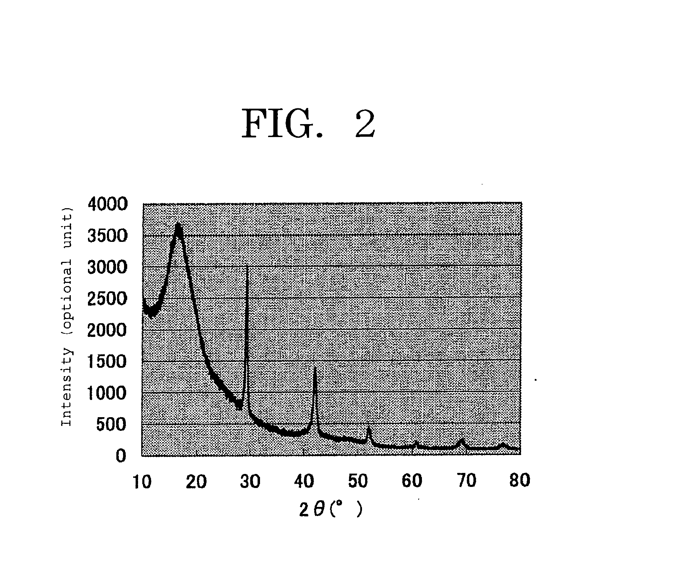

FIG. 2 is a view showing an X ray diffraction spectrum of a recording material in Example 1;
FIG. 3 is a view showing a change in a degree of modulation in Example 8; and
FIG. 4 is a view showing a repeat property at a recording linear velocity of 35 m/s in Example 4 and Comparative Example 10.

### Best Modes for Carrying Out the Invention

The present invention will be described in detail below.

In the present invention, an alloy composed of Ga, Sn, In and Sb is used as a recording material where initial crystallization is easy and recording at high line speed can be achieved at DVD 10 times speed. In GaSb, a melting point is high and storage stability is good, but when an Sb amount is increased to make a crystallization speed fast, crystals with different particle sizes easily grow and a distribution of reflection rates after the initialization becomes large to generate noise. Thus, in the present invention, variation of the particle sizes was made small by decreasing the Sb amount totally, and the noise was reduced by uniformly performing the initial crystallization within the periphery. Since the crystallization speed becomes slow by decreasing the Sb amount, the crystallization speed was made fast to cover it by adding Sn which easily becomes crystal nuclei to GaSb. Furthermore, the degree of modulation could be increased by adding In. The degree of modulation seems to be increased because a thermal conductivity of the recording material is increased by adding In and thus the mark becomes easily large.

In particular, when the composition defined in the present invention 1 is satisfied, the initial crystallization was easy and repeated recording at DVD 10 times speed (35 m/s) was possible. When the Ga amount is less than 5%, amorphization becomes difficult, and the degree of modulation and jitter are spoiled. When the Ga amount exceeds 20%, the crystallization speed becomes too slow and the repeated recording at DVD 10 times speed becomes impossible. When the Sn amount is less than 2%, the crystallization speed becomes too slow and the repeated recording at DVD 10 times speed becomes impossible. When the Sn amount exceeds 20%, the crystallization speed becomes too fast and the amorphization becomes difficult. When the In amount is less than 2%, the degree of modulation is small, and when it exceeds 20%, a repeated recording property is spoiled. When the Sb amount is less than 40%, the amorphization is difficult, and when it exceeds 80%, uniformity within the periphery after the initialization is spoiled. And, the desired crystallization speed can be obtained by controlling the amounts of Ga, Sn and In. In particular, to obtain the sufficient degree of modulation at DVD 10 times speed (35 m/s), it is preferable that the composition ranges are 5≤α≤15, 5≤β≤15, 5≤γ≤15 and 55≤δ≤75.

A film thickness of the recording layer is typically about 10 nm to 20 nm.

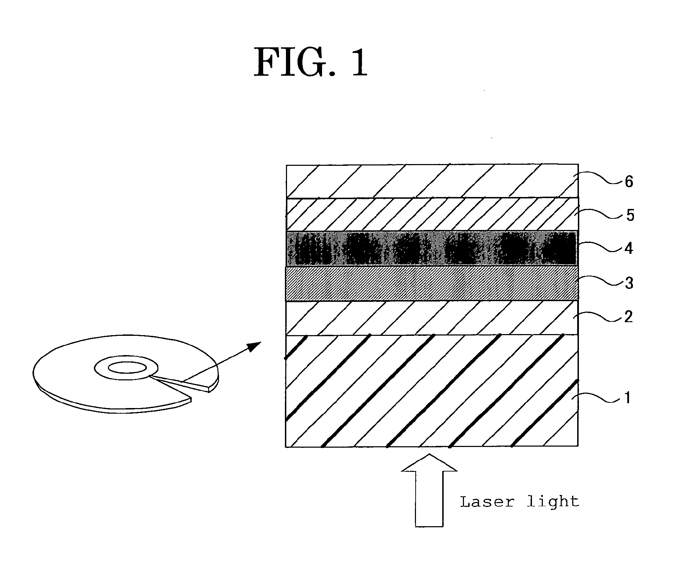

In FIG. 1, a basic layer constitution of the optical recording medium of the present invention is shown. Such a medium is manufactured by providing a first intermediate layer 2, a phase change recording layer 3, a second intermediate layer 4 and a reflective layer 5 in this order on a substrate 1 by a spattering method, and then laminating a protection layer 6 composed of a UV cured resin by a spin coating method. In addition, to reinforce or protect the medium, another substrate may be attached thereon.

As substrate materials, glass, ceramics or resins are generally used, and the substrate made from the resin is desirable in terms of cost. Examples of the resins include polycarbonate resins, acryl resins, epoxy resins, polystyrene resins, polyethylene resins, polypropylene resins, silicone resins and fluorine resins, and the polycarbonate resin is preferable in terms of workability and optical property. A shape of the substrate may be any of a disc shape, a card shape or a sheet shape. A length of the substrate may be optional, e.g., 1.2 mm, 0.6 mm, 0.1 mm, and the like.

Materials used for the first intermediate layer and the second intermediate layer include oxides such as SiO₂, TiO₂, ZnO and ZrO₂, nitrides such as AlN, Si₃N₄ and TiN, sulfides such as ZnS, In₂S₃ and TaS₃, carbides such as SiC, TiC and ZrC, or mixtures thereof.

The first intermediate layer plays a role of protecting the recording layer so that impurities such as water are not contaminated from the substrate into the recording layer, a role of giving no thermal damage to the substrate and a role of controlling the optical property. Thus, the material in which water is difficult to be permeated, heat resistance is excellent, an absorbability k is small and a refraction index n is large is favorable. The first intermediate layer also plays a role as a light interference layer which enables effective light absorption of the recording layer. Thus, it is desirable to have the optical property suitable for the repeated recording at high line speed. A preferable material includes (ZnS)₈₀(SiO₂)₂₀.

The film thickness of the first intermediate layer is 40 nm to 300 nm, preferably about 60 nm to 150 nm. The second intermediate layer plays the role of controlling the thermal property of the recording layer. When the film thickness of the second intermediate layer is thinned, the heat is easily lost, and when its film thickness is thickened, the heat is difficult to be lost. It is also required that adhesiveness between the recording layer and the reflective layer is excellent and the heat resistance is high. Furthermore, the second intermediate layer also plays the role as the light interference layer which enables effective light absorption of the recording layer. Thus, it is desirable to have the optical property suitable for the repeated recording at high line speed. Preferable materials include (ZnS)₈₀(SiO₂)₂₀.

The film thickness of the second intermediate layer is 5 nm to 50 nm, preferably about 5 nm to 20 nm.

The reflective layer is preferably composed of Ag or an alloy containing Ag such as Ag-Cu, Ag-Pd and Ag-Ti, which is highly thermally conductive. In the above alloy containing Ag, it is preferable to contain Ag at 80 atomic % or more. The film thickness of the reflective layer is preferably 60 nm to 300 nm. When the thickness is less than 60 nm, a heat release effect is not obtained and the amorphous is difficult to be formed. When it exceeds 300 nm, boundary separation easily occurs. To obtain the particularly sufficient degree of modulation, it is preferable to be 120 nm to 250 nm. In pure Ag, the heat release effect is the highest, but when S is contained in the second intermediate layer, S is diffused and generates Ag₂S to easily deteriorate. Thus, it is necessary to form a layer between the second intermediate layer and the reflective layer to prevent the diffusion of S. Preferable materials include SiC, Si and SiO₂ When a layer number is reduced for enhancing the productivity, if not pure Ag but the Ag alloy in which Cu, Pd, Ti, or Al has been added is used, the deterioration of Ag can be inhibited without using the layer which prevents the diffusion of S.

According to the present invention 1, it is possible to provide the phase-change optical recording medium where the distribution of the reflection rates within the periphery after the initial crystallization is uniform and the overwriting record at the same capacity as in DVD-ROM at a recording linear velocity of DVD 10 times speed (35 m/s) is possible.

According to the present invention 2, it is possible to further provide the phase-change optical recording medium where the degree of modulation is large at DVD 10 times speed (35 m/s).

According to the present invention 3 to 5, it is possible to further provide the phase-change optical recording medium where the degree of modulation is large and an overwriting recording property is excellent.

### Example

The present invention will be described more specifically below by Examples and Comparative Examples, but the present invention is not limited to these Examples.

### Examples 1 to 7, and Comparative Examples1 to 9

Each optical recording medium in Examples and Comparative Examples was manufactured as follows.

Films for a first intermediate layer, a phase change recording layer, a second intermediate layer, a vulcanization prevention layer and a reflective layer in this order were formed by a spattering method on a polycarbonate substrate with a diameter of 12 cm and a thickness of 0.6 mm having a guiding slot with a track pitch of 0.74 µm and a slot depth of 400 angstroms.

In the first intermediate layer, (ZnS)₈₀(SiO₂)₂₀ was used for a target and the film thickness was 70 nm. In the recording layer, an alloy target having the composition (atomic %) corresponding to the material composition shown in Tables 1 and 2 was used and the film thickness was 16 nm. In the second intermediate layer, (ZnS)₈₀(SiO₂)₂₀ was used for the target and the film thickness was 10 nm. In the vulcanization prevention layer, an Si target was used and the film thickness was 4 nm. In the reflective layer, an Ag target was used and the film thickness was 140 nm.

As the alloy target in the recording layer, a disc shaped target was made by previously weighing required amounts, heating/melting in a glass ampoule, removing this to pulverize by a pulverizer and heating/sintering the obtained powder. When the composition ratio in the recording layer after forming the film was measured by an inductively coupled plasma (ICP) emission spectrography, the composition ratio was the same as the previously weighed ratio in the target. A sequential type ICP emission spectrographic apparatus SPS 4000 supplied from Seiko Instruments, Inc. was used for the ICP emission spectrography. In Examples and Comparative Examples described later, the alloy composition in the recording layer is identical to the alloy composition in the spattering target.

**Table 1**

| | Ga (at%) | Sn (at%) | In (at%) | Sb (at%) |
|---|---|---|---|---|
| Example 1 | 5 | 14 | 7 | 74 |
| Example 2 | 15 | 14 | 15 | 56 |
| Example 3 | 11 | 10 | 12 | 67 |
| Example 4 | 7 | 6 | 14 | 73 |
| Example 5 | 9 | 10 | 2 | 79 |
| Example 6 | 7 | 3 | 19 | 71 |
| Example 7 | 19 | 20 | 19 | 42 |

**Table 2**

| | Ga (at%) | Sn (at%) | In (at%) | Sb (at%) |
|---|---|---|---|---|
| Comparative Example 1 | 3 | 20 | 10 | 67 |
| Comparative Example 2 | 22 | 10 | 2 | 63 |
| Comparative Example 3 | 18 | 1 | 12 | 69 |
| Comparative Example 4 | 6 | 22 | 11 | 61 |
| Comparative Example 5 | 8 | 19 | 1 | 72 |
| Comparative Example 6 | 10 | 11 | 22 | 57 |
| Comparative Example 7 | 5 | 10 | 5 | 80 |
| Comparative Example 8 | 20 | 20 | 20 | 40 |

| | Ga (at%) | N (at%) | In (at%) | Sb (at%) |
|---|---|---|---|---|
| Comparative Example 9 | 10 | 4 | 3 | 83 |

Then, a protection layer was formed by applying an acryl based cured resin with a thickness of 5 to 10 µm on the reflective layer by the spin coating method followed by being cured with ultraviolet ray.

The optical recording medium of Examples and Comparative Examples was made by further adhering a polycarbonate substrate with a diameter 12 cm and a thickness of 0.6 mm thereon with an ultraviolet ray cured resin.

The initial crystallization was performed by using an initialization apparatus POP120-7AH supplied from Hitachi Computer Peripherals Co., Ltd., rotating the above optical recording medium at a constant line speed of 12 m/s and irradiating laser light whose power density was 20 mW/µm² with sending toward a radius direction and moving at 36 µm/r.

For these optical recording media, the record was reproduced using a pick-up with a wavelength of 660 nm and NA of 0.65. Random patterns were recorded by EFM+ modulation mode which was the modulation mode of DVD under recording conditions: recording linear velocity at 35 m/s (10 times faster speed), recording line density at 0.267 µm/bit which was the same as the capacity in DVD-ROM, recording power at Pw = 30 mW and erasing power at Pe = 7 mW The recording was performed by optimizing each recording strategy. All reproductions were performed at a line speed of 3.5 m/s at power of 0.7 mW.

In the above optical recording media, the uniformity of distribution within the periphery after the initial crystallization, the degree of modulation, and the jitter and the storage stability of initial recording and after 100 times of overwriting at a recording linear velocity of 35 m/s (10 times speed) were evaluated. The results are shown in Tables 3 and 4. The jitter is a value obtained by standardizing data to clock jitter σ with detection window width Tw.

Evaluation criteria of each item to be evaluated are as follows.

### (Uniformity of the distribution within the periphery after the initial crystallization)

After performing the initial crystallization under the above initialization condition, using an optical disc evaluation apparatus (DDU-1000) having the pick-up with a wavelength of 660 nm and NA of 0.65 supplied from Pulstec Industrial Co., Ltd., the distribution of the reflection rates within the periphery was identified. When the distribution of the reflection rates within the periphery is (maximum reflection rate - minimum reflection rate)/maximum reflection rate x 100, the case having the distribution of the reflection rates within the periphery within 10% was determined to be B whereas the case having the distribution over 10% was determined to be C.

### (Degree of modulation at recording linear velocity of 35 m/s [10 times speed])

The case having 60% or more which was a standard value in DVD was determined to be B, the case having 65% or more where the more stable system could be obtained was determined to be A, and the case having less than 60% was determined to be C.

### (Jitter after initial recording and after 10 times of overwriting at recording linear velocity of 35 m/s [10 times faster speed])

The case where a jitter value of 3T signal was 9% or less was determined to be B, and the case having the value more than 9% was determined to be C.

### (Storage stability)

A record mark was written in the optical recording medium, which was subsequently kept in an incubator at 80°C at 85% RH for 300 hours, and then, the case where the elevation of the jitter was less than 2% was determined to be B, and the case of elevating 2% or more was determined to be C. For the optical recording medium in which the recording could not be performed at 35 m/s, the recording and the evaluation was performed by changing the recording linear velocity.

**Table 3**

| | Uniformity of distribution within periphery after initial crystallization | Degree of modulation in recording at 10 times speed | Jitter after initial recording at 10 times speed | Jitter after 100 times of overwriting at 10 times speed | Storage stability |
|---|---|---|---|---|---|
| Example 1 | B | A | B | B | B |
| Example 2 | B | A | B | B | B |
| Example 3 | B | A | B | B | B |
| Example 4 | B | A | B | B | B |
| Example 5 | B | B | B | B | B |
| Example 6 | B | B | B | B | B |
| Example 7 | B | B | B | B | B |

**Table 4**

| | Uniformity of distribution within periphery after initial crystallization | Degree of modulation in recording at 10 times speed | Jitter after initial recording at 10 times speed | Jitter after 100 times of overwriting at 10 times speed. | Storage stability |
|---|---|---|---|---|---|
| Comparative Example 1 | B | C | C | C | C |
| Comparative Example 2 | C | C | C | C | C |
| Comparative Example 3 | C | C | C | C | C |
| Comparative Example 4 | B | C | C | C | B |
| Comparative Example 5 | B | C | C | C | C |
| Comparative Example 6 | B | B | B | C | B |
| Comparative Example 7 | C | C | C | C | C |
| Comparative Example 8 | B | C | C | C | C |
| Comparative Example 9 | C | C | C | C | C |

In the optical recording media of Examples 1 to 7, the uniformity of the distribution within the periphery after the initial crystallization was good, and the jitters after the initial recording and 100 times of overwriting at DVD 10 times speed were good. The degree of modulation was 65% or more by which the stable system was obtained, which was particularly good in Examples 1 to 4. For the storage stability, it was found that the change in the jitters was small and the stability of the amorphous mark was good.

On the contrary, in Comparative Example 1, the degree of modulation and the recording jitter at 10 times speed were spoiled. In Comparative Example 2, the repeat recording property at 10 times speed and the uniformity of the distribution within the periphery after the initial crystallization were spoiled. In Comparative Example 3, the uniformity of the distribution within the periphery after the initial crystallization was spoiled and thus the recording jitter was also spoiled. In Comparative Example 4, the crystallization speed was too fast and amorphization was difficult, and thus the recording at 10 times speed could not be done. In Comparative Example 5, the uniformity of the distribution within the periphery after the initial crystallization was good, but the degree of modulation in the recording at 10 times speed was small and the recording jitter was also spoiled. In Comparative Example 6, the uniformity of the distribution within the periphery after the initial crystallization and the jitter after the initial recording at 10 times speed were good, but the repeat recording property was spoiled. In Comparative Example 7, the uniformity of the distribution within the periphery after the initial crystallization was spoiled, and thus the recording jitters were also spoiled. in Comparative Example 8, the uniformity of the distribution within the periphery after the initial crystallization was good, but crystallization speed was too fast and the amorphization was difficult, and thus the recording at 10 times speed could not be done. In Comparative Example 9, the uniformity of the distribution within the periphery after the initial crystallization was spoiled, and thus the recording jitters were also spoiled.

### Example 8

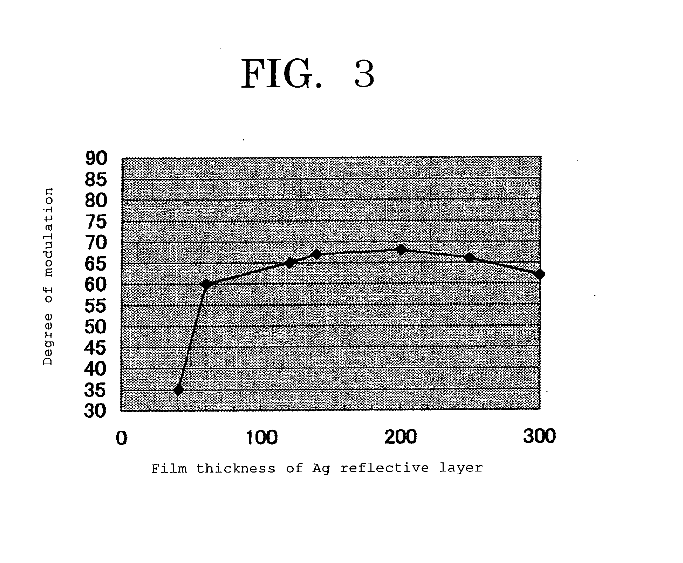

The optical recording media were manufactured by the same way as in Example 2 except that the film thickness of the reflective layer was changed to 40 nm, 60 nm, 120 nm, 140 nm, 200 nm, 250 nm and 300 nm, and the degree of modulation at a recording linear velocity of 35 m/s was examined. The results are shown in FIG. 3.

The degree of modulation was 60% or more in the media having the reflective layer with a film thickness of 60 nm to 300 nm, in particular, the degree of modulation was 65% or more in the media having the reflective layer with a film thickness of 120 nm to 250 nm, and the degree of modulation enough to obtain the stable system was obtained.

### Reference Example

The optical recording medium was manufactured by the same way as in Example 4 except that the reflective layer material was changed to AlTi (Til % by weight), and the degree of modulation at a recording linear velocity of 35 m/s was examined. Consequently the degree of modulation was 55% which was small.

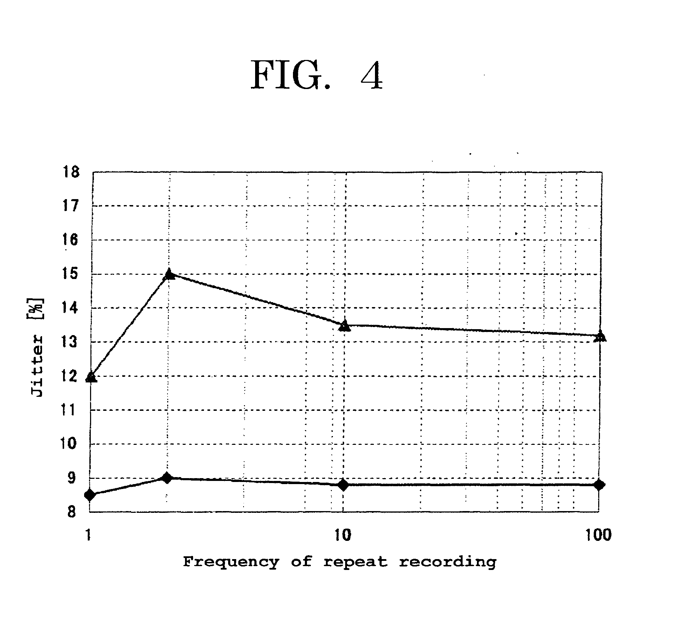

Repeating properties at a recording linear velocity of 35 m/s in Example 4 and Reference Example are shown in FIG. 4. In FIG. 4, a graph obtained by connecting points of black lozenge shows the result in Example 4, and a graph obtained by connecting points of black triangle shows the result in Reference Example.

## Claims

1. A phase-change optical recording medium comprising:
a substrate;
a first intermediate layer;
a recording layer;
a second intermediate layer; and
a reflective layer,
wherein the first intermediate layer, the recording layer, the second intermediate layer, and the reflective layer are formed on the substrate in this order,
the recording layer is composed of an alloy with a composition represented by GaαSnβInγSbδ (α, β,γ and δ are atomic ratios, 5≤α≤20, 2≤β≤20, 2≤γ≤20, 40≤δ≤80, α + β + γ + δ = 100), and
the phase-change optical recording medium is writable and erasable by taking advantage of a reversible phase change between an amorphous phase and a crystal phase in the recording layer.

2. Aphase-change optical recording medium according to claim 1, wherein the atomic ratios are 5≤α≤15, 5≤β≤15, 5≤γ≤15 and 55≤δ≤75.

3. A phase-change optical recording medium according to claim 1 or 2, wherein the reflective layer is composed of one of Ag and an alloy comprising at least 80 atomic % Ag.

4. A phase-change optical recording medium according to claim 3, wherein a film thickness of the reflective layer is 60 nm to 300 nm.

5. Aphase-change optical recording medium according to claim 4, wherein a film thickness of the reflective layer is 120 nm to 250 nm.
